# EUROPEAN PATENT APPLICATION

(11) **EP 2 595 224 A1**
(43) Date of publication of application: **22.05.2013**
(21) Application number: 11189799.7
(22) Date of filing: 18.11.2011
(51) Int. Cl.: H01M 4/56, H01M 10/0525, H01M 4/1315, H01M 4/485, H01M 4/505, H01M 4/131, C01G 23/00

(54) **Doped lithium titanium spinel compound and electrode comprising the same**

(71) Applicant: Süd-Chemie IP GmbH & Co. KG, 80333 München (DE)
(72) Inventor: Laumann, Andreas, 80636 München (DE); Holzapfel, Michael, 77694 Kehl (DE); Wendrich, Genovefa, 84051 Essenbach (DE)
(74) Representative: Stolmár & Partner

(57) **Abstract**

The present invention relates to a doped lithium titanium spinel with formula I Li₄₋yK'_{y}Ti_{5-z}K"_{z}O₁₂₋ₓAₓ (I), wherein A is on or more anions selected from the group is consisting I, N, Br, Cl, F, K', K" are each one or more cations selected from the group consisting of Na, K, Cd, Se, Te, S, Sb, As, P, Pb, Bi, Hg, Si, C and 0 ≤ x, y, z ≤ 0.4. Further, the present invention relates to an electrode comprising a layer of such lithium titanium spinel and a secondary non-aqueous electrolyte battery with such an electrode.

## Description

The present invention relates to a doped lithium titanium spinel, a method for its production and an electrode comprising a doped lithium titanium spinel and a secondary non-aqueous electrolyte battery with such an electrode.

Standard secondary lithium ion batteries contain usually carbon-based anodes, mostly made of graphite. Carbon operates at a potential of 0 to 200 mV vs. Li/Li⁺. At these potentials no electrolyte solvent and salt known up to date is thermodynamically stable. Lithium batteries using graphite anodes can work with several thousand of cycles since during the first cycle the electrolyte at the solid liquid interface is reduced and the resulting species (polymeric species, lithium alkoxide carbonates, lithium alkoxides, lithium carbonate, lithium fluoride and lithium fluorophosphates) are forming a layer being insoluble in the electrolyte and electronically isolating but conductive for Li⁺. During this first cycle a part of the reduction products are also obtained as gases (Co, Co₂, H₂, CH₄, C₂H₄ etc.). Thus, generally speaking lithium ion batteries are submitted to this first slow formation cycle whereupon the layer (Solid Electrolyte Interface, SEI) is formed and gases are released only when the battery is hermetically sealed. During the following cycles the gas formation is low enough to permit thousands of cycles without excessive gas formation.

It appears that in the case of lithium titanate (Li₄Ti₅O₁₂ or lithium titanium spinel) as active anode material the aforedescribed situation appears to be different and more complex.

The use of lithium titanate Li₄Ti₅O₁₂, or lithium titanium spinel for short, in particular as a substitute for graphite as anode material in rechargeable lithium-ion batteries was proposed some time ago.

The advantages of Li₄Ti₅O₁₂ compared with graphite are in particular its better cycle stability, its better thermal rating and the higher operational reliability. Li₄Ti₅O₁₂ has a relatively constant potential difference of 1.56 V compared with lithium and achieves several 1000 charge/discharge cycles with a loss of capacity of < 20%.

Thus lithium titanate has a clearly more positive potential than graphite which has previously usually been used as anode in rechargeable lithium-ion batteries.

However, the higher potential also results in a lower voltage difference. Together with a reduced capacity of 175 mAh/g compared with 372 mAh/g (theoretical value) of graphite, this leads to a clearly lower energy density compared with lithium-ion batteries with graphite anodes.

However, Li₄Ti₅O₁₂ has a long life and is non-toxic and is therefore also not to be classified as posing a threat to the environment. Also doped Li₄Ti₅O₁₂, wherein the titanium sites have been doped with metals has been proposed in CN 101877407. Upon using lithium titanate as an anode, the formation of gas during the formation cycle was also observed. However, gassing can continue even after the formation and eventually last for hundreds and thousands of the cycles. This causes major problems in the so-called battery packs since the gassing in the hermetically sealed battery packs ends in blowing up the packs and finally destroying the battery packs after several hundreds of cycles. (see Jin et al. Argonne National Laboratory Presentation, May 9 to 13, 2011). This phenomenon leads also to a power fade mechanism as was shown for example in lithium titanium spinel/LiMNn₂O₄ cells (Belharouak I., et al., 28th International Battery Seminar & Exhibit, Fort Lauderdale, Florida, March 15, 2011).

Lithium titanate shows as already described above a plateau at 1.56 V versus Li/Li⁺ and generally the lower potential limit for operation is set to 1.0 V vs. Li/Li⁺ (sometimes 1.2 V or even 1.5 V). At these potential it is believed that the electrolyte is stable and thus would not be reduced during its lifetime. As a result, lithium titanate is said to be an anode material which does not form an SEI. However, it was observed that there is indeed a reduction of electrolyte components taking place on the surface of lithium titanate. The gas formation of these cells is a major problem and a serious drawback for the lifetime of secondary ion lithium batteries containing lithium titanium spinel as anode material.

The gas formed is mainly, or to a large part, hydrogen which is also a safety risk. Possible sources of this hydrogen are remaining physisorbed humidity within the cell (in anode, separator, cathode or electrolyte) which is reduced to hydrogen, remaining chemisorbed water within the lithium titanate (LTO) itself, protons of the solvent molecules of the electrolyte. Various mechanisms may contribute to this effect:
The surface of LTO contains Ti-OH groups which show dexydroxylation behaviour similar to that of TiO₂. Moreover, these surface groups may react with CO₂ to form surface carbonates. TiO₂ is known for its photocatalytic effects in various applications, e.g. the cleavage of water into H₂ and O₂ by sun-light or the decomposition of organic matter by sun-light. It can be assumed that the catalytic effect of TiO₂ surfaces can also be active without sun-light, even though with much reduced kinetics. In this case the amount of hydrogen formed should be proportional to the surface area of the LTO. Indeed, higher amounts of gas formed for fine particle materials can be found than for materials with a lower BET surface.

Further it is fairly impossible to prepare 100 % of Li₄Ti₅O₁₂ phase. Therefore, a small excess of lithium salt (as for example Li₂CO₃ or LiOH) is used to ensure that all TiO₂ will react (and rutile can almost be not detected by XRD), so that an excess of TiO₂ cannot interfere in the gas formation.

Also an interference of soluble metal species originating from the cathode materials is one further possible source gassing phenomena:
LiMn₂O₄ and, to a lesser amount, LiFePO₄ are known to release soluble Mn and Fe species into the electrolyte during operation as cathode active material. These soluble metal species can be reduced at the low potential of the anode (graphite and lithium titanate) to insoluble species as low-valent oxides or even metal on the surface of the anode material. Even for LiMeO₂-based materials as LiCoO₂, NMC and NCA such dissolution of metal traces cannot be excluded. See also Dedryvère et al., JPCC 2009 (cited above), where a possible anodic reduction and deposition of organic species - which were oxidized on the cathode beforehand - is discussed. The redeposited metal adds to the triple interphase lithium titanate, Al and electrolyte, at a potential of 1.0V vs. Li/Li⁺ and could increase hydrogen formation by a catalytic effect.

Therefore, the problem to be solved by the present invention was to provide a material suitable as an active electrode material based on lithium titanium spinel which does not show a gassing or at least a retarded or minimized gassing over the working lifetime of an electrode containing this active material.

This problem is solved by the provision of a lithium titanium spinel compound of formula (I)

Li₄-yK'yTi_{5-z}K"_{z}O₁₂-ₓAₓ (I)

wherein
A is one or more anion(s) selected from the group consisting of I, N, Br, Cl, F,
K', K" are each one or more cation(s) selected from the group consisting of Na, K, Cd, Se, Te, S, Sb, As, P, Pb, Bi, Hg, Si, C
and 0 ≤ x, y, z ≤ 0.4.

The doping of the lithium titanium spinel according to the present invention can take place for the cations at the lithium positions and/or the titanium positions or for the anions at the oxygen positions in the spinel crystal lattice. In some embodiments of the invention, a doping is present not only at one of these positions but at two or even at three of these positions at the same time.

Further specific formulae of these aforementioned embodiments are in one aspect of the present invention compounds with formulae (II) to (IV) where doping occurs only at one position:

Li_{4-y}K'_{y}Ti₅O₁₂ (II)

Li₄Ti₅O₁₂-ₓAₓ (III)

Li₄Ti₅-_{z}K"_{z}O₁₂ (IV)

wherein 0 < x, y, z ≤ 0.4 and A, K', K" are defined as in the foregoing.

In preferred embodiments of the present invention the amount of doping at the specific sites is x = 0, z = 0 and y = 0.01 to 0.2. In further embodiments the values are x = 0, y = 0 and z = 0.01 to 0.2, preferably z is in the range of 0.01 to 0.1 and still more preferred z is in the range of 0.02 to 0.07.

In still further embodiments of the present invention the spinels with the above-mentioned formulae have the following dopant concentrations: x = 0, z = 0, y = 0.01 to 0.2, preferably y is in the range of 0.01 to 0.1 and more preferred from 0.02 to 0.07. In a further embodiment x = 0.01 to 0.2, preferably 0.01 to 0.1 and more preferred from 0.02 to 0.07 and y and z are 0.

In other aspects of the invention, doping is present at two positions described by formulae (V) to (VII):

Li_{4-y}K'yTi_{5-z}K"_{z}O₁₂ (V)

Li_{4-y}K'_{y}Ti₅O₁₂-ₓAₓ (VI)

and

Li₄Ti_{5-z}K"_{z}O₁₂-ₓAₓ (VII)

with 0 < x, y, z ≤ 0.4 and A, K' and K" defined as in the foregoing.

The lithium titanium spinels according to the formulae mentioned above have dopant concentration of x = 0 and y, z are in the range from 0.01 to 0.12, preferably from 0.01 to 0.1 and more preferred from 0.02 to 0.07, or y = 0 and y, z are in the ranges from 0.01 to 0.2, preferably from 0.01 to 0.1 and more preferred from 0.02 to 0.07. Alternatively z = 0 and x, y are in the range from 0.01 to 0.2, preferably from 0.01 to 0.1 and more preferred from 0.02 to 0.07.

Generally speaking, dopant concentrations for x, y and z in the range from 1000 to 20000 ppm are preferred for the purpose of the present invention, in more specific embodiments, the dopant concentration is 1000 to 8000 ppm, in still other embodiments 2000 to 7500 ppm.

Surprisingly it was found that the doping according to the invention with dopants generally being considered as catalyst poisons does not lead to the drawbacks described for transition metal doping of lithium titanate, like significant loss of reversible electric power generating capacity during a first charge-discharge cycle, or a loss in capacity as described in US 2011/0067230 and the presence of increased gassing during cycling.

Instead no loss of reversible electric power generating capacity during a first charge-discharge cycle and no loss in capacity compared to pure lithium titanate has been observed with the compounds of the present invention when used as active anode material in secondary lithium ion batteries.

Also a significant loss in gassing compared to non-doped lithium titanate has been observed. It appears that the dopants can suppress the formation of hydrogen from the sources discussed above.

In embodiments of the invention K', K" are each one or more cation(s) selected from the group consisting of wherein K', K" are each one or more cation(s) selected from the group consisting of Na, K, Cd, S, Sb, As, P, Te, Se, C. Preferably Kʺ is selected from the group consisting of S, Sb, As, P, Te, Se, C, preferably Sb, As, P and C, still more preferred Sb, As and P.

In specific embodiments of the invention, the compound has the formula Li₄Ti_{5-z}Sb_{z}O₁₂. Specific compounds represented by this formula are Li₄Ti_{4,99}Sb_{0,01}O₁₂, Li₄Ti₄,₉₈Sb₀,₀₂O₁₂, Li₄Ti₄,₉₇₅Sb₀,₀₂₅O₁₂, Li₄Ti₄,₉₅Sb₀,₀₅O_{12f} Li₄Ti₄,₉Sb₀,₁O₁₂, Li₄Ti_{4,85}Sb_{0,15}O₁₂, Li₄Ti₄,₈Sb₀,₂O_{12,} Li₄Ti₄,₇₅Sb₀,₂₅O₁₂, Li₄Ti₄,₅Sb₀,₅O₁₂. Especially preferred are Li₄Ti₄,₉₈Sb₀,₀₂O₁₂, Li₄Ti₄,₉₇₅Sb₀, ₀₂₅O₁₂, Li₄Ti₄,₉₅Sb₀,₀₅O₁₂.

The doped lithium titanate according to the invention is phase-pure. The term "phase-pure" or "phase-pure lithium titanate" means according to the invention that no rutile phase can be detected in the end-product by means of XRD measurements within the limits of the usual measurement accuracy. In other words, the lithium titanate according to the invention is essentially rutile-free in this embodiment. The term "essentially" is understood such as that minor traces of rutile which might almost not be detected by standard XRD measurements are present in the product.

In still further embodiments of the invention the doped lithium titanium spinel is additionally doped with a further metal or transition metal selected from the group consisting of Fe, Co, V, Cr, Mn, Mg, Sc, Y, Zn, Al, Ga, Pt, Pd, Ru, Rh, Au, Ag, Cu or several of these which provides novel compounds with enhanced capacity when used as active electrode materials.

In particular, this object is achieved by the incorporation of metal ions Al, Mg, Ga, Fe, Co, Sc, Y, Mn, Ni, Cr, V or several of these ions, into the lattice structure. Aluminium or Magnesium is quite particularly preferred.

The synthesis of the doped lithium titanium spinels according to the invention is carried out either by conventional solid state synthesis by mixing and usually milling the staring materials and sintering at elevated temperatures or by sol-gel and even wet-chemical procedures. The dopant can also be introduced by physical means in the non-doped lithium titanate.

More specifically doped Li₄Ti₅O₁₂ according to the invention is obtained by means of a solid-state reaction between a titanium compound, typically TiO₂, a lithium compound, typically Li₂CO₃, and an oxide or hydroxide of the dopant element at high temperatures of over 750°C, as described in principle in: Cai et al. Int. J. Energy Research 2011, 35; 68-77 and Yi et al. J. Electrochem. Soc. 158 (3) A266-A274 (2011). Another possibility is the use of doped TiO₂ (Hashimoto et al. Jap. J. Appl. Phys. 2005, vol. 44, No. 12, pp 8269-8285) wich gives access to doped lithium titanates where the titanium sites are doped. For the doping with anions, the (stoichiometric) use of corresponding Lithium salts like LiF, LiBr ,LiCl and Li₂SO₄ has been proven the most successful route (Yi et al, J. Phys. Chem Solids 71 (2010), 1236-1242). Doping with nitrogen was either carried out as proposed for TiO₂ by Hashimoto et al. in J. Appl. Phys. 44 (2), 8269-8285, 2005 or by the above mentioned solid state reaction in the presence of hydrazine or urea compounds. S, N- and C-doping was also carried out in analogy to TiO₂ doping as described in Chen et al. Chem. Rev. 107, 2891-2959. S-doping can also be carried out in a solid state reaction using thiourea as sulfur source.

Alternatively, sol-gel processes for the preparation of doped Li₄Ti₅O₁₂ can also be used (DE 103 19 464 A1). Furthermore, preparation processes by means of flame spray pyrolysis are also known synthetic routes (Ernst, F.O. et al. Materials Chemistry and Physics 2007, 101(2-3, pp. 372-378) as well as so-called "hydrothermal processes" in anhydrous media (Kalbac, M. et al., Journal of Solid State Electrochemistry 2003, 8(1) pp. 2-6).

The doped lithium titanium spinel according to the invention has a BET surface area (measured in accordance with DIN 66134) of 1-10 m²/g, preferably < 10 m²/g, still more preferably < 8 m²/g and quite particularly preferably < 5 m²/g. In a quite particularly preferred embodiment, typical values lie in the range of 3-5 m²/g, more preferred 2-4 m²/g.

The primary particles (crystallites) of the doped lithium titanium spinel typically have a size of < 2 µm. It is important according to the invention that the primary particles are small with the result that the current-carrying capacity and the cycle stability of an electrode containing the doped lithium titanium spinel according to the invention are particularly high.

In a further embodiment of the present invention, the particles of the doped lithium titanium spinel are coated with a carbon-containing layer to increase the conductivity of the doped lithium titanium spinel and to increase the rate capability of an electrode containing the doped lithium titanium spinel according to the invention as active material. Further, the processability of a carbon-coated lithium titanium spinel in the preparation of an electrode is improved compared to non-coated lithium titanium spinels.

The term "carbon-containing" is here understood to mean a pyrolytically obtained carbon material which forms by thermal decomposition of suitable precursor compounds. This carbon-containing material can also be described synonymously by the term "pyrolytic carbon".

The term "pyrolytic carbon" thus describes a preferably amorphous material of non-crystalline carbon. The pyrolytic carbon is, as already said, obtained from suitable precursor compounds by heating, i.e. by pyrolysis at temperatures of less than 1000°C, in other embodiments ≤ 850°C, in still further embodiments ≤ 800°C and preferably ≤ 750°C.

At higher temperatures of in particular >1000°C an agglomeration of the particles of the lithium titanate spinel due to so-called "fusion" often occurs, which typically leads to a poor current-carrying capacity of the composite material according to the invention. It is important according to the invention in particular that a crystalline, ordered synthetic graphite does not form.

Typical precursor compounds for pyrolytic carbon are for example carbohydrates such as lactose, sucrose, glucose, starch, cellulose, glycols, polyglycols, polymers such as for example polystyrene-butadiene block copolymers, polyethylene, polypropylene, aromatic compounds such as benzene, anthracene, toluene, perylene as well as all other compounds known to a person skilled in the art as suitable per se for the purpose as well as combinations thereof. Particularly suitable mixtures are e.g. lactose and cellulose, all mixtures of sugars (carbohydrates) with each other. A mixture of a sugar such as lactose, sucrose, glucose, etc. and propanetriol is also preferred.

Either the layer of pyrolytic carbon can be deposited onto the particles of the doped lithium titanium spinel according to the invention compound by direct in-situ decomposition onto the particles brought into contact with the precursor compound of pyrolytic carbon, or the carbon-containing layers are deposited indirectly via the gas phase, when a portion of the carbon precursor compound is first evaporated or sublimated and then decomposes. A coating by means of a combination of both decomposition (pyrolysis) processes is also possible according to the invention.

The total carbon content of the carbon coated doped lithium titanium spinel according to the invention is preferably < 2 wt.-% relative to the total mass of composite material, still more preferably < 1.6 wt.-%.

To synthesize such a carbon layer, typically, a slurry is formed from the doped lithium titanium spinel by adding an aequeous suspension (for example in the case of lactose, sucrose, cellulose etc) or a solution or the precursor per se (for example benzene, toluene etc) in liquid form of one or more precursor compounds and the slurry is then usually first dried at a temperature of from 100 to 400°C.

The dried mixture can optionally also be compacted. The compacting of the dry mixture itself can take place as mechanical compaction e.g. by means of a roll compactor or a tablet press, but can also take place as rolling, build-up or wet granulation or by means of any other technical method appearing suitable for the purpose to a person skilled in the art.

After the optional compacting of the mixture, in particular the dried mixture, the mixture is sintered at ≤ 850°C, advantageously ≤ 800°C, still more preferably at ≤ 750°C, wherein the sintering takes place preferably under protective gas atmosphere, e.g. under nitrogen, argon, etc. Under the chosen conditions no graphite forms from the precursor compounds for pyrolytic carbon, but a continuous layer of pyrolytic carbon which partly or completely covers the particles of the doped lithium titanium spinel compound does.

Although pyrolytic carbon still forms from the precursor compound over a wider temperature range at higher sintering temperatures than described above, the particle size of the product formed increases through caking, which brings with it the disadvantages described above.

Nitrogen is used as protective gas during the sintering or pyrolysis for production engineering reasons, but all other known protective gases such as for example argon etc., as well as mixtures thereof, can also be used. Technical-grade nitrogen with low oxygen contents can equally also be used. After heating, the obtained product can still be finely ground.

A further aspect of the present invention is an electrode, preferably an anode containing the lithium titanium spinel according to the invention as active material. Typical further constituents of an electrode according to the invention (or in the so-called electrode formulation) are, in addition to the active material, also conductive carbon blacks as well as a binder. According to the invention, however, it is even possible to obtain a usable electrode with active material containing or consisting of the lithium titanium spinel according to the invention without further added conductive agent (i.e. e.g. conductive carbon black), especially when they are already carbon-coated. As already described before, the electrodes according to the invention using the doped lithium titanate according to the invention show a very low amount of gassing upon cycling.

Any binder known per se to a person skilled in the art can be used as binder, such as for example polytetrafluoroethylene (PTFE), polyvinylidene difluoride (PVDF), polyvinylidene difluoride hexafluoropropylene copolymers (PVDF-HFP), ethylene-propylene-diene terpolymers (EPDM), tetrafluoroethylene hexafluoropropylene copolymers, polyethylene oxides (PEO), polyacrylonitriles (PAN), polyacryl methacrylates (PMMA), carboxymethylcelluloses (CMC), and derivatives and mixtures thereof.

Typical proportions of the individual constituents of the electrode material are preferably 90 parts by weight active material, e.g. of the lithium titanium spinel according to the invention, 5 parts by weight conductive carbon and 5 parts by weight binder. A different formulation likewise advantageous within the scope of the present invention consists of 90 - 96 parts by weight active material and 4 - 10 parts by weight binder. The electrode comprises besides the support layer at least one layer consisting of or comprising the active material.

In further embodiments of the present invention the electrode is made such that the concentration of the doping agent (the dopant) in the layer consisting of or comprising lithium titanium spinel according to the invention is a gradient over the thickness of the layer. It is preferred that the concentration is highest at the surface and lowest at the support layer (usually an aluminium or titanium foil) but the other way round, i.e the inverse gradient is also within the scope of the present invention.

In a still further embodiment, the electrode containing a layer of doped lithium titanium spinel according to the invention further comprises at least one second layer of undoped lithium titanium spinel Li₄Ti₅O₁₂. This layer is either arranged on the layer of doped lithium titanium spinel or below. In still further embodiments also several layers of doped lithium titanium spinel and undoped lithium titanium spinel typically alternating may be envisaged.

A further object of the present invention is a secondary lithium-ion battery pack containing an electrode according to the invention as anode, with the result that the battery pack shows very reduced gassing over the lifetime of the battery. The use of such lithium-ion batteries according to the invention is thus also possible in particular in cars with simultaneously smaller dimensions of the electrode or the battery as a whole.

In developments of the present invention, the secondary lithium-ion battery according to the invention has as exemplary cathode/anode pairs LiFePO₄// Li_{4-y}K'yTi_{5-z}K"_{z}O₁₂₋ₓAₓ with a single cell voltage of approx. 2.0 V, which is well suited as substitute for lead-acid cells or LiCoₐ,Mn_{b}Fe_{c}PO₄ // Li_{4-y}K'_{y}Ti_{5-z}K"_{z}O₁₂-ₓAₓ, and further LiMn₂₋ₐNi_{0+b}O₄ LiMn₁.₅Ni_{0.5}O₄ (wherein x, y and z are as defined further above and 0 < a and b ≤ 0.7) with increased cell voltage and improved energy density.

The invention is explained in further detail by way of figures and examples which should not be construed as limiting the scope of the present invention.
- Figure 1: shows the gassing of a doped lithium titanium spinel according to the invention and of a non doped lithium titanium spinel.
- Figure 2: shows the cycling characteristics of an electrode comprising Li₄Ti_{4,99}Sb_{0,01}O₁₂ as active material

### General

### 1. Measurement methods

The BET surface area was determined according to DIN 66134.

The particle-size distribution was determined according to DIN 66133 by means of laser granulometry with a Malvern Mastersizer 2000.

XRD spectra are received on an X-ray diffractometer Bruker D4 on CuK[α] radiation with Sol-X detector. All samples obtained give well-defined spectra correspond to cubic structure (Space Group Fd-3m (227)). Small amounts of residual TiO₂ (0.5%) are present in most of the samples.

### 2. Experimental:

### 2.1 Preparation of doped lithium Titanium Spinels

LiOH·H₂O, Li₂CO₃ and TiO₂ in anatase or rutile form are used below as primary starting products. The water content in the case of commercially available LiOH·H₂O (from Merck) varies from batch to batch and was determined prior to synthesis.

### 2.1.1 Preparation of Li₄Ti_{5-z}Sb_{z}O₁₂

### 2.1.1.1 Solid State Method 1

Li₄Ti_{5-z}Sb_{z}O₁₂ samples were prepared by a solid state method from Sb₂O₃, TiO₂ and Li₂CO₃. Optionally the starting materials were milled (e.g. by a ball-mill, a jet-mill etc.) in a liquid medium (e.g. isopropanol) to form a slurry and dried. Optionally, the dry mixture can be granulated before sintering. In another embodiment the starting materials are only mixed and afterwards granulated. The dried and mixed reactant mixture was heated at 850°C for 24 h in air and then cooled down to room temperature. The resultant product was analyzed by X-Ray diffractometry measurements and Scanning Electron Microscopy (SEM). The typical size of the primary particles was around 200 nm. The particle size distribution measurements (including secondary particles, i.e. agglomerates) for the below mentioned compounds was: d₁₀₀: 7,5 µm, d₉₀: 4,7 µm, d₅₀: 2,3 µm, d₁₀: 0,9µm.

The following antimony doped lithium titanium spinels were synthesized by using 0,5 mol Li₂CO₃, (1-a) mol TiO₂ and a/2 mol Sb₂O₃:
Li₄Ti_{4,99}Sb_{0,01}O₁₂, Li₄Ti_{4,98}Sb_{0,02}O₁₂, Li₄Ti₄, ₉₇₅Sb₀, ₀₂₅O₁₂, Li₄Ti₄,₉₅Sb₀,₀₅O₁₂, Li₄Ti₄,₉Sb₀,₁O₁₂, Li₄Ti₄,₈₅Sb₀,₁₅O₁₂, Li₄Ti_{4,8}Sb_{0,2}O₁₂, Li₄Ti₄,₇₅Sb₀,₂₅O_{12,} Li₄Ti_{4,5}Sb_{0,5}O₁₂.

### 2.1.1.2 Solid State Method 2

Li₄Ti_{5-z}Sb_{z}O₁₂ samples were prepared by a solid state method from Sb-doped TiO₂ (prepared beforehand by the reaction of pure TiO₂ and Sb₂O₃ in the required amounts and reacted at 800°C for 24 h) and Li₂CO₃. The starting materials were optionally milled in a liquid medium to form a slurry and dried. Optionally, the dry mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM). The typical size of the primary particles was about 190 nm.

The following antimony doped lithium titanium spinels were synthesized by using 0,5 mol Li₂CO₃, 5 mol Sb-doped TiO₂:
Li₄Ti₄,₉₉Sb₀,₀₁O₁₂, Li₄Ti_{4,98}Sb_{0,02}O_{12,} Li₄Ti_{4,975}Sb_{0,025}O₁₂, Li₄Ti₄,₉₅Sb_{0,05}O₁₂, Li₄Ti_{4,9}Sb_{0,1}O₁₂, Li₄Ti₄,₈₅Sb_{0,15}O₁₂, Li₄Ti_{4,8}Sb_{0,2}O₁₂, Li₄Ti_{4,75}Sb_{0,25}O₁₂, Li₄Ti_{4,5}Sb_{0,5}O₁₂.

### 2.1.1.3 Combined Hydrothermal/Solid State Method

Further Li₄Ti_{5-z}Sb_{z}O₁₂ samples were prepared by a modified solid state method including a hydrothermal step from Sb-doped TiO₂ (prepared beforehand by the reaction of pure TiO₂ and Sb₂O₃ in the required amounts and reacted at 800°C for 24 h) and Li₂CO₃ by first preparing a Li₂TiO₃/Ti_{1-z}Sb_{z}O₂ composite, alternatively a Li₂Ti₁-_{z}Sb_{z}O₃/TiO₂ or still a Li₂Ti(_{1-z)/2}Sb_{z}O₃/Ti(_{1-z)/2}Sb_{z}O₂ composite as described for the non-doped composite in DE 10 2008 050 692.3 A1 by reaction of the Sb-doped TiO₂ in a LiOH solution. Alternatively, TiO₂ and Sb₂O₃ in the required stoichiometric amounts are reacted in LiOH solutions. The obtained composite was filtered, dried at 100 °C to 200 °C(or spray-dried) and then calcined at 750 ± 20 °C, preferably at T ≤ 750 °C. The particle size distribution measurements (including secondary particles, i.e. agglomerates) for the below mentioned compounds was: d₁₀₀: 50µm, d₉₀: 25 µm, d₅₀: 9 µm, d₁₀: 0,6µm.

The following antimony doped lithium titanium spinels were synthesized by this method:
Li₄Ti_{4,99}Sb_{0,01}O₁₂, Li₄Ti_{4,975}Sb_{0,02}SO₁₂, Li₄Ti_{4,95}Sb_{0,05}O₁₂, Li₄Ti_{4,9}Sb_{0,1}O₁₂, Li₄Ti₄,₈Sb_{0,2}O_{12,} Li₄Ti_{4,75}Sb_{0,25}O₁₂, Li₄Ti_{4,5}Sb_{0,5}SO₁₂, Li₄Ti₄.₃Sb_{0.7}O12.

### 2.1.2 Preparation of Li₄Ti_{5-z}Cd_{z}O₁₂

Li₄Ti_{5-z}Cd_{z}O₁₂ samples were prepared by a solid state method from CdO, TiO₂ and Li₂CO₃.The starting materials were ball-milled or mixed in an isopropanol liquid medium to form a slurry and dried. Optionally, the dry mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM) .

The following cadmium doped lithium titanium spinels were synthesized by using 0,5 mol Li₂CO₃, (1-a) mol TiO₂ and a mol CdO:
Li₄Ti_{4,99}Cd_{0,01}O₁₂, Li₄Ti_{4,95}Cd_{0,05}O₁₂, Li₄Ti_{4,9}Cd_{0,1}O_{12,} Li₄Ti_{4,8}Sb₀,₂O_{12,} Li₄Ti_{4,75}Cd_{0,25}O_{12,} Li₄Ti_{4,5}Cd_{0,5}O₁₂.

### 2.1.3 Preparation of Li₄Ti_{5-z}P_{z}O₁₂

Li₄Ti_{s-z}P_{z}O₁₂ samples were prepared by a solid state method from P₂O₅ (alternatively (NH₄) ₄P₂O₅ or (NH₄) ₄P₂O₇ were used), TiO₂ and Li₂CO₃.The starting materials were ball-milled or mixed in an isopropanol liquid medium to form a slurry and dried. Optionally, the dry mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM) .

The following phosphorus doped lithium titanium spinels were synthesized by using 0,5 mol Li₂CO₃, (1-a) mol TiO₂ and a/2 mol P₂O₅ (or one of the abovementioned salts):
Li₄Ti_{4,99}P_{0,01}O_{12,} Li₄Ti_{4,9}P_{0,1}O_{12,} Li₄Ti_{4,8}P_{0,2}O_{12,} Li₄Ti₄,₇₅P_{0,25}O_{12,} Li₄Ti_{4,5}P_{0,5}O₁₂.

### 2.1.4 Preparation of Li₄Ti_{s-z}As_{z}O₁₂

Li₄Ti_{s-z}As_{z}O₁₂ samples were prepared by a solid state method from As₂O₃, TiO₂ and Li₂CO₃.The starting materials were ball-milled or mixed in an isopropanol liquid medium to form a slurry and dried. Optionally, the dry mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM) .

The following arsenic doped lithium titanium spinels were synthesized by using 0,5 mol Li₂CO₃, (1-a) mol TiO₂ and a/2 mol As₂O₃:
Li₄Ti₄,₉₉As_{0,01}O₁₂, Li₄Ti₄,₉₈As_{0,02}O₁₂, Li₄Ti₄,₉₅As_{0,05}O₁₂, Li₄Ti_{4,9}As_{0,1}O₁₂, Li₄Ti_{4,85}As_{0,15}O₁₂, Li₄Ti_{4,8}As_{0,2}O₁₂, Li₄Ti₄,₇₅As_{0,25}O₁₂, Li₄Ti₄,₅As_{0,5}O₁₂.

### 2.1.5 Preparation of Li₄Ti_{s-z}Bi_{z}O₁₂

Li₄Ti_{5-z}Bi_{z}O₁₂ samples were prepared by a wet chemical method as follows:
tetra-butyl titanate was dissolved in de-ionized water under cooling for the formation of a white precipitate TiO(OH)₂ which was then dissolved by nitric acid to form a limpid titanyl nitrate solution. Stoichiometric amounts of lithiumacetate and bismuth nitrate were added to the solution. The solution was evaporated to dryness and the resulting solid was dried, milled in a planetary mill and calcined at 900°C for 12h in air. The resultant product was analyzed by X-Ray diffractometry measurements and Scanning Electron Microscopy (SEM) .

The following bismuth doped lithium titanium spinels were synthesized by this method:
Li₄Ti_{4,99}Bi_{0,01}O_{12,} Li₄Ti_{4,95}Bi_{0,05}O₁₂, Li₄Ti_{4,75}Bi_{0,25}O_{12,} Li₄Ti_{4,5}Bi_{0,5}O₁₂.

### 2.1.6 Preparation of Li_{4-y}Na_{y}Ti₅O₁₂

Li₄₋yNa_{y}Ti₅O₁₂ samples were prepared by a solid state method from K₂CO₃, TO₂ and Li₂CO₃.The starting materials were optionally ball-milled or mixed in an ethanol liquid medium to form a slurry and dried. Optionally, the dry mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM).

The following sodium doped lithium titanium spinels were synthesized by using 0,5-b mol Li₂CO₃, b mol Na₂CO₃, 1 mol TiO₂:
Li_{3,99}Na_{0,01}Ti₅O₁₂, Li_{3,95}Na_{0,05}Ti₅O₁₂, Li₃,₉Na_{0,1}Ti₅O₁₂, Li_{3,8}Na_{0,2}Ti₅O₁₂, Li_{3,75}Na_{0,25}Ti₅O₁₂, Li₃,₅Na_{0,5}Ti₅O₁₂.

### 2.1.7 Preparation of Li₄Ti₅O₁₂₋ₓClₓ

### a) solid state

Li₄Ti₅O₁₂₋ₓClₓ samples were prepared by a solid state method from LiCl, TiO₂ and Li₂CO₃.The starting materials were ball-milled. Optionally, the dry mixture can be granulated before sintering. The reactant mixture was heated at 850°C for 24 h in air and then cooled down to room temperature. The resultant product was analyzed by X-Ray diffractometry measurements and Scanning Electron Microscopy (SEM).

The following chlorine doped lithium titanium spinels were synthesized by using 0,5-b mol Li₂CO₃, 1 mol TiO₂ and b mol LiCl:
Li₄Ti₅O_{11,99}Cl_{0,01}, Li₄Ti₅O_{11,95}Cl_{0,05,} Li₄Ti₅O_{11,93}Cl_{0,07}, Li₄Ti₅O_{11,9}Cl_{0,1}, Li₄Ti₅O_{11,8}Cl_{0,2}, Li₄Ti₅O_{11,75}Cl₀,₂₅, Li₄Ti₅O_{11,7}Cl_{0,3}, Li₄Ti₅O₁₁,₆Cl_{0,4}, Li₄Ti₅O_{11,5}Cl_{0,5}.

### b) Sol-gel

Cl-doped lithium titanium spinels were prepared by evaporating sol synthesized from commercial Titanium (III) chloride solution, Lithiumoxalate, dehydrated ethanol and 2 N HCl (1: 0,8:2,2 : 0,21 mol ratio). The sol was ecaporated at different temperatures below 100°C. The powders obtained from the sol were sintered at 700°C for 10 h. The resultant product was analyzed by X-Ray diffractometry measurements and Scanning Electron Microscopy (SEM).

The following chlorine doped lithium titanium spinels were synthesized by this method:
Li₄Ti₅O_{11,99}Cl_{0,01}, Li₄Ti₅O_{11,95}Cl_{0,05}, Li₄Ti₅O_{11,9}Cl_{0,1}, Li₄Ti₅O_{11,8}Cl_{0,2}, Li₄Ti₅O_{11,75}Cl_{0,25}, Li₄Ti₅O_{11,5}Cl_{0,5}.

### 2.1.8 Preparation of Li₄Ti₅O₁₂₋ₓBrₓ

Li₄Ti₅O₁₂₋ₓBrₓ samples were prepared by a solid state method from LiBr, TiO₂ and Li₂CO₃. The starting materials were ball-milled or mixed. Optionally, the mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM) .

The following bromine doped lithium titanium spinels were synthesized by using 0,5-b mol Li₂CO₃, 1 mol TiO₂ and b mol LiBr:
Li₄Ti₅O_{11,99}Br_{0,01}, Li₄Ti5O_{11,95}Br_{0,05}, Li₄Ti₅O₁₁,₉₃Br_{0,07}, Li₄Ti₅O₁₁,₉Br_{0,1}, Li₄Ti₅O₁₁,₈₅Br_{0,15}, Li₄Ti₅O_{11,8}Br_{0,2}, Li₄Ti₅O_{11,75}Br_{0,25}, Li₄Ti₅O_{11,7}Br_{0,3}, Li₄Ti₅O_{11,6}Br_{0,4}, Li₄Ti₅O_{11,5}Br_{0,5}.

### 2.1.9 Preparation of Li₄Ti₅O₁₂₋ₓFₓ

Li₄Ti₅O₁₂₋ₓBrₓ samples were prepared by a solid state method from LiF, TiO₂ and Li₂CO₃. The starting materials were ball-milled or mixed. Optionally, the mixture can be granulated before sintering. The dried and mixed reactant mixture was heated at 850°C for 24 h in air and then cooled down to room temperature. The resultant product was analyzed by X-Ray diffractometry measurements and Scanning Electron Microscopy (SEM).

The following fluorine doped lithium titanium spinels were synthesized by using 0,5-b mol Li₂CO₃, 1 mol TiO₂ and b mol LiF:
Li₄Ti₅O_{11,99}F_{0,01}, Li₄Ti₅O_{11,95}F_{0,05}, Li₄Ti₅O_{11,93}F_{0,07}, Li₄Ti₅O_{11,9}F_{0,1,} Li₄Ti₅O_{11,85}F_{0,15}, Li₄Ti₅O_{11,8}F_{0,2}, Li₄Ti₅O_{11,75}F_{0,25}, Li₄Ti₅O_{11,7}F_{0,3}, Li₄Ti₅O_{11,6}F_{0,4}, Li₄Ti₅O_{11,5}F_{0,5}.

### 2.1.10 Preparation of Li₄Ti_{5-z}Sb_{z}O₁₂₋ₓFₓ

Li₄Ti_{5-z}Sb_{z}Oi₂₋ₓFₓ samples were prepared by a solid state method from LiF, Sb₂O₃, TiO₂ and Li₂CO₃.The starting materials were ball-milled in an ethanol liquid medium to form a slurry and dried. Optionally, the dry mixture can be granulated before sintering. The dried and mixed reactant mixture was heated at 900°C for 24 h in air and then cooled down to room temperature. The resultant product was analyzed by X-Ray diffractometry measurements and Scanning Electron Microscopy (SEM) .

The following antimony/fluorine doped lithium titanium spinels were synthesized by using 0,5-b mol Li₂CO₃, 1-a mol TiO₂, a/2 mol Sb₂O₃ and b mol LiF:
Li₄Ti₄.₉₉Sb_{0,01}O₁₁,₉₉F_{0,01}, Li₄Ti₄.₉₈Sb_{0,02}O_{11,95}F_{0,05}, Li₄Ti₄.₉₅Sb_{0,05}O_{11,93}F_{0,07}, Li₄Ti_{4.9}Sb_{0,1}O_{11,9}F_{0,1}, Li₄Ti₄.₈₅Sb_{0,15}O_{11,85}F_{0,15,} Li₄Ti₄.₈Sb₀,₂O₁₁,₈F_{0,2}, Li₄Ti₄.₅Sb_{0,5}O₁₁,₇₅F_{0,25}, Li₄Ti_{4.99}Sb_{0,01}O_{11,7}F_{0,3}, Li₄Ti_{4.99}Sb_{0,01}O_{11,6}F_{0,4,} Li₄Ti₄.₇₅Sb_{0,25}O_{11,5}F_{0,5}.

### 2.1.11 Preparation of Li₄₋yNa_{y}Ti_{5-z}Sb_{z}O₁₂₋ₓBrₓ

Li_{4-y}Na_{y}Ti_{5-z}Sb_{z}O₁₂₋ₓBrₓ samples were prepared by a solid state method from LiBr, Sb₂O₃, Na₂CO₃, TiO₂ and Li₂CO₃. The starting materials were ball-milled in an ethanol liquid medium to form a slurry and dried. Optionally, the dry mixture can be granulated before sintering. The dried and mixed reactant mixture was heated at 900°C for 24 h in air and then cooled down to room temperature. The resultant product was analyzed by X-Ray diffractometry measurements and Scanning Electron Microscopy (SEM).

The following antimony/fluorine doped lithium titanium spinels were synthesized by using 0,5-b-c mol Li₂CO₃, b mol Na₂CO₃, 1-a mol TiO₂, a/2 mol Sb₂O₃ and c mol LiBr:
Li_{3,99}Na_{0,01}Ti_{4.99}Sb_{0,01}O_{11,99}Br_{0,01}, Li_{3,9}Na_{0,1}Sb_{0,02}O₁₁,₉₅F_{0,05}, Li_{3,8}Na_{0,2}Sb_{0,05}O_{11,93}F_{0,07}, Li_{3,5}Na_{0,5}Sb_{0,1}O_{11,9}F_{0,1}, Li_{3,99}Na_{0,01}Sb_{0,15}O_{11,85}F_{0,15}, Li_{3,75}Na_{0,25}Sb_{0,2}O_{11,9}F_{0,2,} Li_{3,6}Na_{0,4}Sb_{0,5}O_{11,75}F_{0,25}, Li_{3,9}Na_{0,1}Sb_{0,01}O_{11,7}F_{0,3}, Li_{3,99}Na_{0,01}Sb_{0,01}O_{11,6}F_{0,4}, Li_{3,99}Na_{0,01}Sb_{0,25}O_{11,5}F_{0,5}.

### 2.2 Manufacture of the Electrode

Standard electrode compositions contained 90 wt.-% active material, 5 wt.-% Super P carbon black and 5 wt.-% PVDF (polyvinylidene fluoride).

Slurries were produced by first producing a 10 wt.-% PVDF 21216 solution in NMP (N-methylpyrrolidone) with a conductive additive (Super P carbon black), which was then further diluted with NMP, and finally adding the respective active material. The resulting viscous suspension was deposited by means of a coating knife onto an aluminium foil which was dried under vacuum at 80°C. Discs with a diameter of 1.3 cm were cut out from this foil, weighed and rolled to approx. 50 µm. The thickness and the density of the electrodes were then measured. The electrodes were then dried overnight in vacuum at 120°C in a Büchi dryer. Corresponding cells were then assembled in a glovebox under argon. The active-mass content of the electrode was 4.1 mg/cm².

The measured potential window was 1,0 V - 2,7 V(against Li⁺/Li). EC (ethylene carbonate):DMC (dimethylene carbonate) 1:1 (vol.) with 1M LiPF₆ was used as electrolyte.

The specific charge-discharge capacity which is achieved at low rates of roughly 165 to 170 Ah/kg is close to the theoretical value.

The capacity and the cycle stability of the doped Li₄Ti₅O₁₂ according to the invention in a typical half cell compared with metal lithium are remarkably good at the C rate with an average decline ("fading") of the order of 0.03%/cycle.

### 2.3. Determination of the capacity and current-carrying capacity

The capacity and current-carrying capacity were measured with the standard electrode composition.

The electrochemical measurements were made in hermetically sealed titanium-based two electrode cells. Electrodes of 1.3 cm in diameter were prepared using 90 % active material (loading 4.1 mg/cm²), 5 % carbon black and 5 % poly(vinylidene difluoride) PVdF binder on Al foil. Before the cells were assembled in an argon-filled glove-box, the thin films of electrode material on the Al-foil were dried at 105 °C under vacuum. The electrolyte was 1 M LiPF₆ in ethylene carbonate (EC) and dimethyl carbonate (DMC) (1:1 molar ratio). Lithium metal was used as counter electrode and glass fibre as separator. The voltage window was between 1.0 and 2.0 V vs. Li/Li⁺. For the first two cycles, the cells were charged/discharged at 10/C. Then, the cells were first charged or discharged at a constant current (CC-mode) of 1C/1D until the voltage reached 1.0 V and 2.0 V, respectively, and then the voltage was held at the cut-off potential until the current reached C/50 and D/50, respectively (CV-mode).

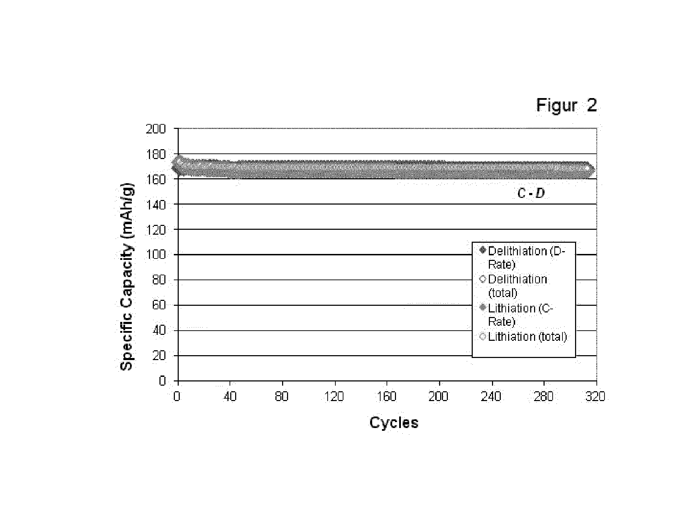

Figure 2 shows the specific capacity of an electrode containing 4.1 g active mass (Li₄Ti_{4,99}Sb_{0,01}O₁₂) and shows an excellent stability over 320 cycles.

### 2.4. Gassing experiments

Two sealed cell packs, i.e. a secondary lithium ion batteries according to the present invention with an cathode/anode pair LiFePO₄// Li₄Ti₄,₉₉Sb_{0,01}O₁₂ (cell C) and LiFePO₄// Li₄Ti_{4,30}Sb_{0,70}O₁₂ (cell B) with a single cell voltage of approx. 2.0 V and as a comparative example a cell pack, with an cathode/anode pair LiFePO₄// Li₄Ti₅O₁₂ (cell A) also with a single cell voltage of approx. 2.0 V were cycled from 1.7 to 2.7 V at 45°C over 500 cycles and the gas evolving from the battery pack was measured. The measurement was carried out in such a way that the battery packs are placed after 50 cycles each in a vessel filled with water and the increase in water volume due to the increase in volume of the hermetically sealed battery pack caused by gassing was measured.

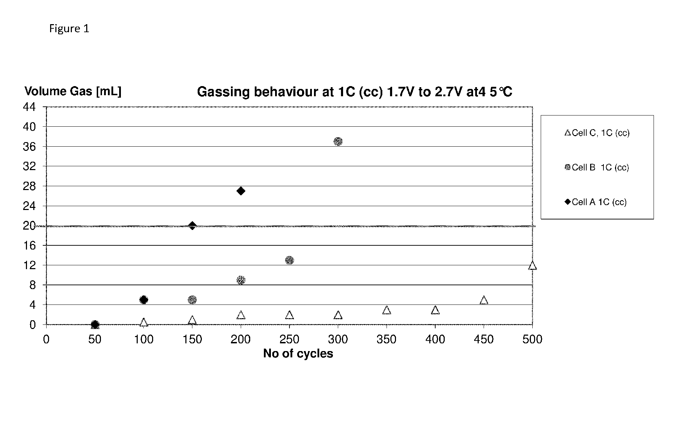

As can be seen from figure 1, cell A with the non doped lithium titanium spinel as active material for the anode showed significant gassing already at 100 cycles and increasing exponentially up to 200 cycles. Cell B with a huge antimony doping of the lithium titanium spinel showed significant gassing only from 150 cycles on, i.e the gassing can generally be slowed down by using a doped lithium titanium spinel. Cell C showed significant gassing only at 500 cycles demonstrating the effect of optimizing the amount of the dopant in the lithium titanium spinel.

## Claims

1. Doped lithium titanium spinel according to formula I
Li_{4-y}K'_{y}Ti_{5-z}K"_{z}O₁₂₋ₓAₓ (I)
wherein
A is one or more anion(s) selected from the group consisting of I, N, Br, Cl, F,
K', K" are each one or more cation(s) selected from the group consisting of Na, K, Cd, Se, Te, S, Sb, As, P, Pb, Bi, Hg, Si, C
and 0 ≤ x, y, z ≤ 0.4.

2. Doped lithium titanium spinel according to claim 1,
wherein K', K" are each one or more cation(s) selected from the group consisting of Na, K, Cd, S, Sb, As, P, Te, Se, C.

3. Doped lithium titanium spinel according to claim 2,
wherein K" is one or more cation selected from the group consisting of S, Sb, As, P, and y and x = 0 and 0 < z < 0.4.

4. Doped lithium titanium spinel according to claim 3,
wherein K" is Sb, As or P, and y and x = 0 and 0 < z < 0.4.

5. Doped lithium titanium spinel according to claim 3 or 4,
wherein 0.01 ≤ z ≤ 0.3.

6. Doped lithium titanium spinel according to claim 4 or 5,
wherein K" is Sb or As.

7. Doped lithium titanium spinel according to one of the preceding claims which is additionally doped with a further metal or transition metal selected from the group consisting of Fe, Cr, Mn, Zn, Al, Ga, Pt, Pd, Ru, Rh, Au, Ag, Cu.

8. Doped lithium titanium spinel according to one of the preceding claims which particles are coated with a carbon-containing layer.

9. Electrode comprising a layer containing the doped lithium titanium spinel according to one of the preceding claims 1 to 8.

10. Electrode according to claim 9, wherein the concentration of the doping agent in the lithium titanium spinel forms a gradient over the thickness of the layer.

11. Electrode according to claim 9 or 10, further comprising a layer of undoped lithium titanium spinel Li₄Ti₅O₁₂.

12. Secondary non-aqueous electrolyte battery with an electrode according to one of claims 9 to 11.
